# EUROPEAN PATENT SPECIFICATION

(11) **EP 2 599 645 B1**
(45) Date of publication and mention of the grant of the patent: **14.05.2014**
(21) Application number: 12189138.6
(22) Date of filing: 18.10.2012
(51) Int. Cl.: B60C 1/00, B60C 9/04, C08L 7/00, B60C 9/20, B60C 9/00

(54) **PNEUMATIC TIRE**
LUFTREIFEN
PNEU

(30) Priority: 01.12.2011 JP 2011263767
(43) Date of publication of application: 05.06.2013
(73) Proprietor: Sumitomo Rubber Industries, Ltd., Hyogo-ken (JP)
(72) Inventor: Ito, Hiroshi, Kobe-shi,, Hyogo 651-0072 (JP); Miyazaki, Tatsuya, Kobe-shi,, Hyogo 651-0072 (JP)
(74) Representative: Manitz, Finsterwald & Partner GbR

(56) References cited:
- EP-A1- 1 726 615
- EP-A1- 1 852 463
- EP-A1- 2 072 280
- EP-A2- 2 141 199
- EP-A2- 2 377 695

## Description

### TECHNICAL FIELD

The present invention relates to a pneumatic tire having a jointless band.

### BACKGROUND OF THE INVENTION

In the automobile society of recent years, abrasion resistance and low rolling resistance (LRR) are required for a tire and various measures have been taken. On the other hand, since the improvement of abrasion resistance of a tire elongates the duration of service thereof, durability of the tire (internal damage) is concerned. A representative example of the internal damage is a damage of a tread portion originating from a breaker edge (BEL: BREAKER EDGE LOOSENESS).

Conventionally, in order to improve durability or uniformity of grounding of the tread portion, there have been used a band such as a jointless band, which is provided on the breaker radially outwardly of the tire so as to contact with the breaker, or a breaker edge strip which is provided on the edge of the breaker, relaxes the movement of the breaker and reduces deformation at the end of the breaker.

However, due to an oxidation degradation of a band topping rubber or a breaker edge strip rubber, hardness of the rubber thereof increases and elongation at break is degraded. Because of this change of rubber properties, a crack generated at the end of the breaker expands to the breaker edge strip rubber and additionally, the crack grows to between the breaker rubber and the band rubber to generate a damage of the tread portion (BEL). Such oxidation degradation of a band topping rubber or a breaker edge strip rubber tends to occur especially when a tire is used in a high temperature section.

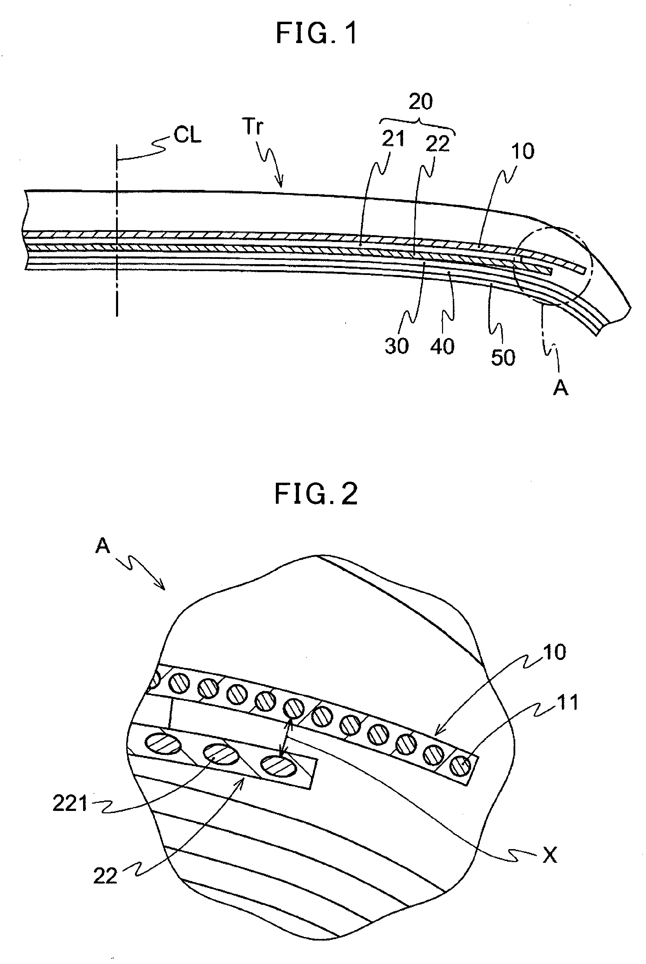

A technique of increasing the thickness of the rubber between the breaker and the band (refer to FIG. 2) is known as a technique of controlling a generation of the BEL. For example, a technique of increasing the thickness of the rubber between the breaker and the band by using a cord having a high degree of elongation at a tension of 66 N (mid elongation), which simulates a vulcanization molding of a tire, and decreasing stress applied on the rubber composition between the breaker and the band by elongating the band cord itself at shaping (at vulcanization).

An example of a cord having high mid elongation is a nylon 66 cord and since the nylon 66 cord is excellent in adhesive property with a band topping rubber, it has been conventionally used as a band cord. However, more recently, the use of a more inexpensive polyester (PE) cord, a composite cord of an aramid fiber and a nylon fiber which is more excellent in stability or high speed durability, a polyethylene naphthalate (PEN) cord which is more excellent in prevention of noise (quietness) when compared with the nylon 66 cord is considered. On the other hand, since these cords have less mid elongation when compared to the nylon 66 cord, there is a problem that the thickness of the rubber between the breaker and the band cannot be increased and BEL easily generates.

While JP 7-232511 A, JP 10-278508 A and JP 2005-22455 A disclose using a predetermined hybrid cord as a band cord, it is not considered to control the generation of BEL and improve long-term durability.

### SUMMARY OF THE INVENTION

An object of the present invention is to solve the above problem and provide a pneumatic tire which is excellent in long-term durability and further in high speed durability by controlling the generation of BEL with a band cord having a small degree of elongation at a tension of 66 N.

The present invention relates to a pneumatic tire having a jointless band obtained by covering a cord which has a cord breaking strength of 200 to 600 N and a degree of elongation of 1.0 to 3.5 % at a tension of 66 N with a rubber composition for a band cord topping comprising 1.5 to 3.1 parts by mass of sulfur, 10 to 55 parts by mass of carbon black having a nitrogen adsorption specific surface area of 38 to 125 m²/g, 1 to 3 parts by mass of at least one compound selected from the group consisting of a resorcinol resin, a modified resorcinol resin, a cresol resin, a modified cresol resin, a phenol resin and a modified phenol resin, and 0.7 to 3 parts by mass of at least one compound selected from the group consisting of a partial condensate of hexamethoxymethylolmelamine and a partial condensate of hexamethylolmelaminepentamethylether based on 100 parts by mass of a rubber component comprising at least 50 % by mass of an isoprene type rubber, wherein the absolute value of the cord angle with reference to the circumferential direction of the tire is 0 to 40 degree.

It is preferable that the cord is a composite cord obtained by twisting an aramid fiber and a nylon fiber together, or a single twisted cord of a polyethylene naphthalate fiber. It is also preferable that the rubber composition for band cord topping comprises 5 to 17 parts by mass of wet silica having a nitrogen adsorption specific surface area of 80 to 250 m²/g based on 100 parts by mass of the rubber component, and has elongation at break EB of at least 450 % and complex modulus E* (70°C) of 5.0 to 9.0 MPa after vulcanization at 170°C for 12 minutes.

It is preferable that the pneumatic tire has a stretch of the band cord in the breaker edge portion due to vulcanization of 0 to 2.5 %.

According to the present invention, a pneumatic tire which is excellent in long-term durability and high speed durability can be provided by making a pneumatic tire having a jointless band obtained by covering a cord which has a cord breaking strength of 200 to 600 N and a degree of elongation of 1.0 to 3.5 % at a tension of 66 N with a rubber composition for band cord topping comprising a given amount of sulfur, a given amount of predetermined carbon black, a given amount of at least one compound selected from the group consisting of a resorcinol resin, a modified resorcinol resin, a cresol resin, a modified cresol resin, a phenol resin and a modified phenol resin, and a given amount of at least one compound selected from the group consisting of a partial condensate of hexamethoxymethylolmelamine and a partial condensate of hexamethylolmelaminepentamethylether based on a rubber component comprising a given amount of an isoprene type rubber.

### BRIEF DESCRIPTION OF THE DRAWINGS

FIG. 1 is a partial cross sectional view of a pneumatic tire according to the present invention.
FIG. 2 is an enlarged view of the breaker edge portion in FIG. 1.

### DETAILED DESCRIPTION

The pneumatic tire of the present invention has a jointless band obtained by covering a cord which has cord breaking strength of 200 to 600 N and a degree of elongation of 1.0 to 3.5 % at a tension of 66 N with a rubber composition for band cord topping comprising a given amount of sulfur, a given amount of predetermined carbon black, a given amount of at least one compound selected from the group consisting of a resorcinol resin, a modified resorcinol resin, a cresol resin, a modified cresol resin, a phenol resin and a modified phenol resin, and a given amount of at least one compound selected from the group consisting of a partial condensate of hexamethoxymethylolmelamine and a partial condensate of hexamethylolmelaminepentamethylether based on a rubber component comprising a given amount of an isoprene type rubber, wherein the absolute value of the cord angle with reference to the circumferential direction of the tire is 0 to 40 degree. Accordingly, the pneumatic tire which is excellent in long-term durability and high speed durability can be provided, even though the thickness of the rubber between the breaker and band is small due to low mid elongation of the band cord to be used.

The cord breaking strength of the present invention is at least 200 N, preferably at least 220 N and more preferably at least 250 N. If the cord breaking strength is less than 200 N, there is a tendency that binding power of the breaker is low and high speed durability is degraded. Further, the cord breaking strength is not more than 600 N, preferably not more than 580 N and more preferably not more than 550 N. If the cord breaking strength is more than 600 N, there is a tendency that the thickness of the rubber between the breaker and the band easily becomes small, and long-term durability is degraded.

Moreover, a degree of elongation at a tension of 66 N (mid elongation) of the cord of the present invention, i.e., the elongation with reference to its original length is 1.0 to 3.5 %. On the other hand, since the mid elongation of a nylon 66 cord is 5 to 10 %, there is a tendency that a pneumatic tire using the cord of the present invention as a band cord has a small thickness of rubber between a breaker and a band and generates BEL, compared to a pneumatic tire using a nylon 66 cord. However, according to the present invention, a pneumatic tire in which a generation of BEL is prevented even if the thickness of the rubber between the breaker and the band is small can be provided, by covering the cord with a predetermined rubber composition for band cord topping.

The mid elongation of the cord of the present invention is preferably at least 1.0 % and more preferably at least 1.2 %. If the mid elongation is less than 1.0 %, the thickness of the rubber between the breaker and the band tends to be too small. Further, the mid elongation is preferably not more than 3.5 % and more preferably not more than 3.3 %. If the mid elongation is more than 3.5 %, binding power of the breaker tends to be decreased.

Examples of the cord of the present invention include a single twisted cord of an organic fiber such as an aramid fiber, a nylon fiber, a polyethylene naphthalate (PEN) fiber, a polyethylene (PE) fiber and a polyethylene terephthalate (PET), and a composite cord obtained by twisting a plurality of different organic fiber cords together. Among them, a single twisted cord of a PEN fiber is preferable in view of excellent property of preventing noise (quietness) and a composite cord is preferable in view of excellent stability, high speed durability and molding processability.

As described above, examples of the composite cord include the one obtained by twisting a plurality of organic fibers having different materials together. Among them, a composite cord obtained by twisting an aramid fiber and a nylon fiber together is preferable in view of excellent stability and high speed durability.

The composite cord, for example, the composite cord obtained by twisting an aramid fiber and a nylon fiber together can be formed by first-twisting one aramid fiber or a plurality of aramid fibers at the same time, similarly first-twisting one nylon fiber or a plurality of nylon fibers at the same time in the same direction as the aramid fiber, followed by final-twisting the first-twisted aramid fiber and the first-twisted nylon fiber in a direction opposite to the first-twisting.

A rubber composition for band cord topping of the present invention comprises a given amount of sulfur, a given amount of predetermined carbon black, a given amount of at least one compound selected from the group consisting of a resorcinol resin, a modified resorcinol resin, a cresol resin, a modified cresol resin, a phenol resin and a modified phenol resin, and a given amount of at least one compound selected from the group consisting of a partial condensate of hexamethoxymethylolmelamine and a partial condensate of hexamethylolmelaminepentamethylether based on a rubber component comprising a given amount of an isoprene type rubber.

The rubber component of the rubber composition for band cord topping of the present invention comprises a given amount of an isoprene type rubber.

Examples of an isoprene type rubber include an isoprene rubber (IR), a natural rubber (NR) and a modified natural rubber. The NR includes a deproteinized natural rubber (DPNR) and a high purity natural rubber (HPNR) and examples of the modified natural rubber include an epoxidized natural rubber (ENR), a hydrogenated natural rubber (HNR) and a grafted natural rubber. In addition, for example, general ones in tire industry such as SIR20, RSS#3 and TSR20 can be used as the NR. Among them, the NR and the IR are preferable and the NR is more preferable.

The content of the isoprene type rubber in the rubber component is at least 50 % by mass, preferably at least 60 % by mass and more preferably at least 70 % by mass. If the content of the isoprene type rubber is less than 50 % by mass, elongation at break decreases and durability is degraded. Further, fuel efficiency is also degraded. In addition, the content of the isoprene type rubber is preferably not more than 90 % by mass and more preferably not more than 85 % by mass. If the content thereof is more than 90 % by mass, a reversion may increase.

Other than the isoprene type rubber, examples of the one used as a rubber component include a butadiene rubber (BR), a styrene-butadiene rubber (SBR), a styrene-isoprene-butadiene rubber (SIBR), an ethylene-propylene-diene rubber (EPDM), a chloroprene rubber (CR) and an acrylonitrile-butadiene rubber (NBR). The rubber component may be used alone, or at least two types may be combined and used. Among them, the SBR and the BR are preferable in respect of reversion resistance, heat resistance and crack growth resistance and the SBR is more preferable.

The BR is not limited especially and for example, general ones used in tire industry such as a BR having a high cis content, e.g. BR1220 manufactured by Zeon Corporation and BR150B manufactured by Ube Industries, Ltd., a BR comprising 1,2-syndiotactic polybutadiene crystal (SPB), e.g. VCR412 and VCR617 manufactured by Ube Industries, Ltd., and a BR synthesized by use of a Nd-based catalyst, e.g. BUNA CB 25 and BUNA CB 24 manufactured by Lanxess AG can be used. In addition, a tin-modified butadiene rubber (tin-modified BR) which is modified by a tin compound can be also used.

The SBR is not limited especially and examples thereof include an emulsion polymerized styrene-butadiene rubber (E-SBR), a solution polymerized styrene-butadiene rubber (S-SBR), a modified SBR which is modified by (3-Aminopropyl)dimethylmethoxysilane and the like. Among them, the E-SBR is preferable in respect of a large amount of high molecular weight polymer components and excellent elongation at break.

In the case where a SBR is comprised as a rubber component, the content of the SBR is preferably at least 10 % by mass and more preferably at least 15 % by mass. If the content of the SBR is less than 10 % by mass, a reversion may increase. Further, the content of the SBR is preferably not more than 50 % by mass, more preferably not more than 40 % by mass and yet further preferably not more than 30 % by mass. If the content of the SBR is more than 50 % by mass, elongation at break may be decreased.

The rubber composition for band cord topping of the present invention comprise a given amount of sulfur.

The content of sulfur is at least 1.5 parts by mass and preferably at least 2.0 parts by mass based on 100 parts by mass of the rubber component. If the content is less than 1.5 parts by mass, adhesive property with a cord is degraded and a separation is generated between the cord and the rubber. Further, complex modulus and elongation at break are also degraded and thus durability is degraded. In addition, fuel efficiency is also degraded. Further, the content of sulfur is not more than 3.1 parts by mass and preferably not more than 2.5 parts by mass. If the content is more than 3.1 parts by mass, a cross-linking density increases due to an oxidation degradation and thereby elongation at break is degraded and durability is degraded.

Since a better reinforcing property can be obtained and complex modulus, low heat build-up property, elongation at break and durability can be improved in a balanced manner, the rubber composition for band cord topping of the present invention comprises carbon black.

The nitrogen adsorption specific surface area (N₂SA) of the carbon black is at least 38 m²/g, preferably at least 60 m²/g and more preferably at least 90 m²/g. If the N₂SA of the carbon black is less than 38 m²/g, there is a tendency that sufficient reinforcing property cannot be obtained and hardness and elongation at break (in the new condition and in the condition after a heat oxidation degradation) are degraded. Further, the N₂SA of the carbon black is not more than 125 m²/g and preferably not more than 115 m²/g. If it is more than 125 m²/g, fuel efficiency and processability (sheeting processability) tend to be degraded. The nitrogen adsorption specific surface area of the carbon black is measured according to JIS K6217, page 7, method A.

The content of the carbon black is at least 10 parts by mass and preferably at least 20 parts by mass based on 100 parts by mass of the rubber component. If the content of the carbon black is less than 10 parts by mass, sufficient reinforcing property cannot be obtained and complex modulus tends to be degraded, and sufficient elongation at break cannot be obtained either and durability tends to be degraded. Further, the content of the carbon black is not more than 55 parts by mass and preferably not more than 50 parts by mass. If the content of the carbon black is more than 55 parts by mass, low heat build-up property, elongation at break, processability (sheeting processability) and durability tend to be degraded.

The rubber composition for band cord topping of the present invention comprises at least one compound (resin) selected from the group consisting of a resorcinol resin (condensate), a modified resorcinol resin (condensate), a cresol resin, a modified cresol resin, a phenol resin and a modified phenol resin. These may be used alone, or at least two types may be combined and used. By comprising at least one of these compounds, adhesive property with a cord, elongation at break and complex modulus can be improved. Among them, a resorcinol resin, a modified resorcinol resin and a modified cresol resin are preferable and the modified resorcinol resin is more preferable.

Examples of the resorcinol resin include a resorcinol formaldehyde condensate and a specific example thereof is a resorcinol manufactured by Sumitomo Chemical Co., Ltd. Examples of the modified resorcinol resin include the one in which a part of a repeating unit of a resorcinol resin is alkylated and specific examples thereof are Penacolite Resin B-18-S, B-20 manufactured by INDSPEC Chemical Corporation, SUMIKANOL 620 manufactured by Taoka Chemical Co., Ltd., R-6 manufactured by Uniroyal Chemical Company Inc., SRF1501 manufactured by Schenectady Chemical,. Inc. and Arofene7209 manufactured by Ashland Inc.

Examples of the cresol resin include a cresol formaldehyde condensate. Examples of the modified cresol resin include the one in which a methyl group at the terminal of a cresol resin is modified into a hydroxyl group and the one in which a part of a repeating unit of a cresol resin is alkylated. Specific examples thereof include SUMIKANOL 610 manufactured by Taoka Chemical Co., Ltd. and PR-X11061 manufactured by Sumitomo Bakelite Co., Ltd.

Examples of the phenol resin include the one obtained by allowing a phenol to react with aldehydes such as formaldehyde, acetaldehyde and furfural with an acid catalyst or an alkali catalyst. Among these, the one obtained by allowing a reaction with an acid catalyst (such as novolac-type phenol resin) is preferable. Further, examples of the modified phenol resin include resins in which a phenol resin is modified by use of cashew oil, tall oil, linseed oil, a wide variety of oil extracted from animals and plants, unsaturated fatty acid, rosin, alkyl benzene resin, aniline, melamine and the like.

The content of these compounds (resin) is at least 1 part by mass and preferably at least 1.2 parts by mass based on 100 parts by mass of the rubber component. If the content thereof is less than 1 part by mass, complex modulus decreases and durability is degraded. Further, the content of these compounds (resin) is not more than 3 parts by mass and preferably not more than 2.5 parts by mass. If the content thereof is more than more than 3 parts by mass, dispersibility of the resin is degraded and fuel efficiency, elongation at break, processability (sheeting processability) and durability are degraded.

The rubber composition for band cord topping of the present invention comprises at least one compound (methylene donor) selected from the group consisting of a partial condensate of hexamethoxymethylolmelamine (HMMM) and a partial condensate of hexamethylolmelaminepentamethylether (HMMPME). These may be used alone, or at two types may be combined and used.

The present invention can enhance adhesive property between the cord and the rubber by comprising a partial condensate of HMMM and/or a partial condensate of HMMPME. Among these, a partial condensate of HMMPME is preferable. On the other hand, if hexamethylenetetramine (HMT) is used, ammonia is generated as a decomposition product during vulcanization and thus adhesive property with the cord is not sufficient and durability is degraded.

The content of the methylene donor is at least 0.7 part by mass and preferably at least 0.8 part by mass based on 100 parts by mass of the rubber component. If the content of the methylene donor is less than 0.7 part by mass, the supply of methylene is small and complex modulus (E*) may be decreased. Further, the content of the methylene donor is not more than 3 parts by mass and preferably not more than 2.5 parts by mass. If the content is more than 3 parts by mass, elongation at break (after heat oxidation degradation) may be decreased.

It is preferable that the rubber composition for band cord topping of the present invention comprises silica, in view of that elongation at break and adhesive property with the cord can be improved.

The silica is not limited especially and examples thereof include a dry silica (anhydrous silicic acid) and a wet silica (hydrous silicic acid) and due to a large number of silanol groups, a wet silica is preferable.

The nitrogen adsorption specific surface area (N₂SA) of the silica is preferably at least 80 m²/g, more preferably at least 100 m²/g and yet further preferably at least 110 m²/g. If the N₂SA of the silica is less than 80 m²/g, there is a tendency that elongation at break is decreased and durability is degraded. Further, the N₂SA of the silica is preferably not more than 250 m²/g, more preferably not more than 235 m²/g and yet further preferably not more than 220 m²/g. If the N₂SA is more than 250 m²/g, fuel efficiency and processability (sheeting processability) tend to be degraded. Additionally, the nitrogen adsorption specific surface area of the silica is the value measured with the BET method according to ASTM D3037-81.

In the case where the above silica is comprised, the content thereof is preferably at least 5 parts by mass and more preferably at least 7 parts by mass based on 100 parts by mass of the rubber component. If the content of the silica is less than 5 parts by mass, there is a tendency that elongation at break is decreased and durability is degraded. In addition, fuel efficiency tends to be degraded. Further, the content of the silica is preferably not more than 17 parts by mass, more preferably not more than 15 parts by mass and yet further preferably not more than 13 parts by mass. If the content of the silica is more than 17 parts by mass, there is a tendency that dispersibility is degraded and complex modulus E* is decreased. Moreover, there is a tendency that the silica is aggregated during heating at a sheet processing or during being stored after the sheet processing and processability is degraded.

If the content of the silica is in the above range, the silica is mixed into the carbon black gel and dispersed with the carbon black, thereby the aggregation of the silica during kneading or vulcanization can be prevented. Therefore a silane coupling agent does not have to be comprised substantially. If a silane coupling agent is comprised, the content thereof is preferably not more than 8 parts by mass and more preferably not more than 6 parts by mass. In addition, if the content of the silica is not more than a half of the content of the carbon black, the content of the silane coupling agent can be 0 part by mass. Therefore E* and hardness can be improved and excellent durability and the reduction of the cost can be achieved. The above effect is significant when the content of the carbon black is at least 20 parts by mass based on 100 parts by mass of the rubber component. Moreover, the above effect is significant when an isoprene type rubber is comprised as a rubber component, especially when an isoprene type rubber and an E-SBR are combined and used.

Further, when the silica and the carbon black are combined and used, the total content thereof is preferably at least 30 parts by mass and more preferably at least 35 parts by mass based on 100 parts by mass of the rubber component. If the total content is less than 30 parts by mass, sufficient elongation at break, complex modulus and dispersibility of filler tend not to be obtained. Further, the total content is preferably not more than 60 parts by mass and more preferably not more than 55 parts by mass. If the total content is more than 60 parts by mass, fuel efficiency and elongation at break tend to be degraded.

Other than the above components, the rubber composition for band cord topping of the present invention can comprise combination agents which are generally used in a production of a rubber composition and for example, filler for reinforcement such as clay, a silane coupling agent, a stearic acid, a zinc oxide, a wide variety of antioxidants, oil such as aromatic oil, wax, a vulcanization accelerator, a vulcanization accelerating aid and the like can be combined according to need.

When the above zinc oxide is comprised, the content thereof is preferably at least 5.5 parts by mass and more preferably 6 parts by mass based on 100 parts by mass of the rubber component. Further, the content of the zinc oxide is preferably not more than 15 parts by mass, more preferably not more than 12 parts by mass, yet further preferably not more than 9 parts by mass and especially preferably not more than 8 parts by mass. If the content of the zinc oxide is in the above range, the effect of the present invention tends to be obtained more appropriately.

In the present invention, it is preferable that the rubber physicality of the rubber composition for band cord topping after vulcanization under the condition at 170°C for 12 minutes, i.e. the rubber physicality of the rubber composition for band cord topping obtained by kneading the above rubber component and other combination agents if needed with a Banbury mixer, a kneader, an open roll or the like, followed by vulcanizing under the condition at 170°C for 12 minutes is in a predetermined range, in view of excellent expression of binding power of the breaker and durability of the rubber between the breaker and the band.

The elongation at break EB of the rubber composition for band cord topping of the present invention after vulcanization under the condition at 170°C for 12 minutes is preferably at least 450 %, more preferably at least 470 % and yet further preferably at least 500 %. If the elongation at break EB is less than 450 %, there is a tendency that elongation at break EB is decreased by the use and BEL is generated easily. Further, the elongation at break EB is preferably not more than 800 % and more preferably not more than 750 %. If the elongation at break EB is more than 800 %, there is a tendency that complex modulus E* is low and breaker binding power is decreased, and high-speed durability is degraded.

Moreover, the complex modulus E* (70°C) of the rubber composition for band cord topping of the present invention after vulcanization at 170°C for 12 minutes is preferably at least 5.0 MPa, more preferably at least 5.5 MPa and yet further preferably at least 6.0 MPa. If the complex modulus E* (70°C) is less than 5.0 MPa, high-speed durability tends to be degraded. Further, the complex modulus E* (70°C) is preferably not more than 9.0 MPa and more preferably not more than 8.5 MPa. If the complex modulus E* (70°C) is more than 9.0 MPa, there is a tendency that elongation at break EB is low and durability of the rubber between the breaker and the band is insufficient.

The jointless band of the present invention can be obtained by winding a jointless band tape obtained by covering a given number of band cords with the rubber composition for band cord topping or a cord where a band cord is covered with the rubber composition for band cord topping one by one such that the angle with reference to the circumferential direction of the tire is in a predetermined range and laminating the obtained band tape or code with other tire members to carry out vulcanization. The jointless band of the present invention can be also obtained by winding the rubber composition sheet for band cord topping and a band cord thereon respectively, and laminating the obtained member with other tire members to carry out vulcanization.

Examples of the winding method of the above jointless band tape include a method of spirally winding the jointless band tape with an equal space therebetween, or a method of lap winding the jointless band little by little. The jointless band formed in this manner is fused to the adjacent jointless bands due to the subsequent vulcanization process and then further fused to the adjacent breaker topping rubber and the tread rubber.

The number of the band cords used for the above jointless band tape is preferably at least three and more preferably at least five. If the number of the band cords is less than three, productivity at the molding of an unvulcanized tire tends to be degraded. Further, the number of the band cords is preferably not more than 15 and more preferably not more than 13. If the number of the band cords is more than 15, there is a tendency that the breaker binding power of the portion at the beginning of the roll and the portion at the end of the roll is low and high speed durability is degraded.

The thickness of the above jointless band tape is preferably at least 0.5 mm and more preferably at least 0.7 mm. If the thickness of the jointless band tape is less than 0.5 mm, there is a tendency that the cord strength is low and high speed durability is degraded. Further, the thickness of the jointless band tape is preferably not more than 1.5 mm and more preferably not more than 1.3 mm. If the thickness of the jointless band tape is more than 1.5 mm, there is a tendency that the thickness of the tread portion is increased, self-heating is increased and long-term durability and high speed durability are degraded.

The width of the above jointless band tape is preferably at least 3 mm and more preferably at least 5 mm. If the width of the jointless band tape is less than 3 mm, there is a tendency that the cord strength is low and productivity is degraded. Further, the width of the jointless band tape is preferably not more than 20 mm and more preferably not more than 18 mm. If the width of the jointless band tape is more than 20 mm, there is a tendency that the breaker binding power of the portion at the beginning of the roll and the portion at the end of the roll is low and high speed durability is degraded.

Examples of the winding method of the cord, in which a band cord is covered with the rubber composition for band cord topping one by one, include a method of spirally winding the cords with an equal space therebetween, or a method of spirally winding the cord by overlapping a part thereof. In the jointless band formed in this manner, the rubber compositions covering the adjacent cords are fused to each other due to the subsequent heat vulcanization and are further fused to the adjacent breaker topping rubber and the tread rubber.

The diameter of the cord covered with the above rubber composition for band cord topping (diameter of the cord + covering rubber layer × 2) can be selected appropriately in the scope where the effect of the present invention is not adversely affected, considering the cord diameter of the band cord to be used, a degree of mid elongation and additionally, the size of the gauge on the cord after vulcanization or the thickness of the rubber between the breaker and the band. Generally, it is preferable that the thickness of the covering rubber layer × 2 is 0.15 to 0.70 mm. If the thickness of the covering rubber layer × 2 is less than 0.15 mm, there is a tendency that the thickness of the rubber between the breaker and the band becomes too small and long-term durability is degraded. In addition, if the thickness is more than 0.70 mm, there is a tendency that the thickness of the rubber at the tread portion is large and high speed durability is degraded.

Examples of a method of winding the rubber composition sheet for band cord topping and the band cord respectively include a method of arranging the rubber composition sheet for band cord topping A on the breaker and winding the band cord thereon, or a method of further arranging the rubber composition sheet for band cord topping B on the wound band cord, i.e. a method of sandwiching the band cord with the rubber composition sheets for band cord topping A and B. In the jointless band formed in this manner, the band cord is covered with the rubber composition sheet for band cord topping due to the subsequent heat vulcanization.

The thickness of the rubber composition sheets A and B for band cord topping is preferably at least 0.15 mm and more preferably at least 0.20 mm. If the thickness of these rubber composition sheets is less than 0.15 mm, there is a tendency that the gauge on the cord after vulcanization cannot be assured and high speed durability is degraded because the band cord directly contacts the tread rubber or the thickness of the rubber between the breaker and the band becomes too small.

The absolute value of the band cord angle with reference to the circumferential direction of the tire in the jointless band of the present invention is 0 to 40 degree and preferably 0 to 30 degree. If the absolute value of the band cord angle is more than 40 degree, there is a tendency that resistance to fatigue from flexing is not satisfactory and cutting of the cord easily generates.

The pneumatic tire of the present invention has the above jointless band. The jointless band will be explained below, referring to FIG. 1. FIG. 1 is a partial cross sectional view of a tread portion of a pneumatic tire according to the present invention. In FIG. 1, the vertical direction on the plane of paper is the radial direction of the tire, the horizontal direction on the plane of paper is the axial direction of the tire and the vertical direction to the plane of paper is the circumferential direction of the tire. The chain line CL represents the equatorial plane of the pneumatic tire. The tread portion Tr of the pneumatic tire according to the present invention is provided with an inner liner 50, a carcass 40, a tie gum 30 and a breaker 20 in order from the inside of the radial direction of the tire. Further, a jointless band 10 is provided on the breaker 20 radially outwardly of the tire. The breaker 20 consists of an inner layer 22 and an outer layer 21 and the binding power due to the case or the strength of the tire can be improved by arranging a steel cord in the inner layer 22 and a steel cord in the outer layer 21 such that they intersect with each other with reference to the circumferential direction of the tire. In addition, the binding power due to the case or the strength of the tire can be further improved by binding the breaker with the jointless band 10.

FIG. 2 shows an enlarged view of the breaker edge portion in FIG. 1. A plurality of breaker cords 221 are provided in the inner layer 22 of the breaker and a plurality of band cords 11 are provided in the jointless band 10. X is the length from the surface of the breaker cord 221 at the end of the inner layer 22 of the breaker to the closest band cord 11 and it shows the thickness of the rubber between the breaker and the band in the present invention.

The pneumatic tire of the present invention is produced by a usual method using the jointless band obtained by covering the band cord with the rubber composition for band cord topping of the present invention. That is, an unvulcanized tire is molded by laminating the jointless band of the present invention together with other members of the tire in a tire molding machine. The pneumatic tire of the present invention is obtained by vulcanizing the unvulcanized tire in a vulcanizer.

When the unvulcanized tire is vulcanized, each tire member generates a stretch (elongation with reference to the original length thereof) according to the shape of a metal mold. Here, in the case where the stretch of the band cord due to the vulcanization at the breaker edge portion is small, the thickness of the rubber between the breaker and band tends to be increased. Therefore the stretch of the band cord at the breaker edge portion at the vulcanization is preferably not more than 2.5 %, more preferably not more than 2.3 % and most preferably 0 %. In addition, the stretch of the band cord due to the vulcanization at the breaker edge portion is calculated by comparing the circumferential length of the band in the tire shown by a vulcanization metal mold, i.e. in the tire on the structural drawing for design and the circumferential length of the surface of the unvulcanized tire, i.e. the breaker (outer layer) at molding by laminating.

The pneumatic tire of the present invention can be preferably used as tire for passenger cars, tire for motorcycles and tire for light trucks. In addition, since the pneumatic tire of the present invention is excellent in long-term durability and high speed durability, it can be preferably used as tire having a long life-span and tire for electric vehicles/fuel-cell vehicles having a heavy vehicle total weight.

### EXAMPLE

The present invention is specifically described based on Examples, but the present invention is not limited only thereto.

Various types of chemicals used in Examples and Comparative Examples are described below.
NR: TSR20
SBR: Nipol 1502 manufactured by Zeon Corporation (E-SBR, the content of styrene: 23.5 % by mass)
BR (rare-earth BR): BUNA CB 25 manufactured by Lanxess AG (BR synthesized by use of a Nd-based catalyst, the content of cis: 96 % by mass)
Silica (1): ULTRASIL VN3 manufactured by Evonik-Degussa GmbH (N₂SA: 175 m²/g)
Silica (2): Z1085Gr manufactured by Rhodia Japan, Ltd. (N₂SA: 80 m²/g)
Carbon black (1): N550 manufactured by Mitsubishi Chemical Corporation (N₂SA: 40 m²/g)
Carbon black (2): N326 manufactured by Mitsubishi Chemical Corporation (N₂SA: 78 m²/g)
Carbon black (3): N219 manufactured by Mitsubishi Chemical Corporation (N₂SA: 76 m²/g)
Carbon black (4): N220 manufactured by Mitsubishi Chemical Corporation (N₂SA: 119 m²/g)
Carbon black (5): N110 manufactured by Mitsubishi Chemical Corporation (N₂SA: 127 m²/g)
Oil: vivatec500 manufactured by H&R AG (TDAE oil)
Silane coupling agent: Si75 manufactured by Evonik-Degussa GmbH (bis(3-triethoxysilylpropyl)disulfide)
Antioxidant: NOCRAC 224 (2,2,4-trimethyl-1,2-dihydroquinoline polymer) manufactured by Ouchi shinko Chemical Industrial CO., LTD.
Stearic acid: stearic acid available from NOF CORPORATION
Zinc oxide: Zinc oxide manufactured by Mitsui Mining & Smelting Co., Ltd.
Sulfur: insoluble sulfur manufactured by FlexSys Inc. (oil portion: 20 %)
Vulcanization accelerator: Nocceler NS manufactured by Ouchi Shinko Chemical Industrial Co., Ltd. (N-tert-butyl-2-benzothiazylsulfeneamide) SUMIKANOL 620: SUMIKANOL 620 manufactured by Taoka Chemical Co., Ltd. (modified resorcinol resin (modified resorcinol formaldehyde condensate))
SUMIKANOL 610: SUMIKANOL 610 manufactured by Taoka Chemical Co., Ltd. (methacresol resin)
PR12686: PR12686 manufactured by Sumitomo Bakelite Co., Ltd. (cashew oil-modified phenol resin)
PR53194: PR53194 manufactured by Sumitomo Bakelite Co., Ltd. (non-modified phenol resin (novolac-type phenol resin))
PR-X11061: PR-X11061 manufactured by Sumitomo Bakelite Co., Ltd. (high purity cresol resin)
HMMM: SUMIKANOL 508 manufactured by Taoka Chemical Co., Ltd. (partial condensate of hexamethoxymethylolmelamine (HMMM) (ingredient content: 100 % by mass))
HMMPME: SUMIKANOL 507A manufactured by Sumitomo Chemical Co., Ltd. (modified etherified methylolmelamine resin (partial condensate of hexamethylolmelaminepentamethylether (HMMPME), comprising silica and oil of 35 % by mass in total)
HMT: Nocceler H manufactured by Ouchi Shinko Chemical Industrial Co., Ltd. (hexamethylenetetramine)

A wide variety of cords used in Examples and Comparative Examples are shown in Table 1.

**TABLE 1**

| Cord | Material | Structure | Breaking Strength (N) | Diameter of Cord (mm) | First Twisting / Second Twisting | Mid Elongation (%) |
|---|---|---|---|---|---|---|
| A | Aramid / Nylon | 1670dtex/2K+940dtex/N66 | 497 | 0.83 | 28/28 | 1.5 |
| B | Aramid / Nylon | 1100dtex/K+940dtex/N66 | 189 | 0.57 | 42/30 | 3.3 |
| C | PEN | 1670dtex/2 | 225 | 0.72 | 35/35 | 2.3 |
| D | PEN | 1100dtex/2 | 151 | 0.55 | 38/38 | 3.5 |
| E | Nylon | 1400dtex/2 | 223 | 0.68 | 36/36 | 9.0 |
| F | Nylon | 1400dtex/2 | 200 | 0.68 | 13/13 | 6.0 |
| G | Steel | 1X4/2.7HT | 700 | 0.69 | - | - |

In Table 1, A and B are a composite cord of an aramid fiber and a nylon fiber and C to F are a single twisted cord of the fiber shown in Table 1. Here, the breaking strength and the diameter of the cord in Table 1 are the value measured according to JIS 1017. The number of twisting is the rotation number per 10 cm of the cord. The mid elongation is a rate of elongation with reference to the original length at a tension of 66 N measured with a tensile testing machine manufactured by INTESCO Co., Ltd. Additionally, it was impossible to measure the mid elongation of the cord G (steel) due to a large margin of error.

### EXAMPLES 1 to 17 and COMPARATIVE EXAMPLES 1 to 10

According to the compounded formula shown in Tables 2 to 4, the compounded materials except sulfur, the vulcanization accelerator and the methylene donor (HMMM, SUMIKANOL 507A and HMT) were kneaded with a Banbury mixer till the temperature became 180°C to obtain the kneaded product. Then, sulfur, the vulcanization accelerator and the methylene donor (HMMM, SUMIKANOL 507A and HMT) were added into the obtained kneaded product and kneaded with a biaxial open roll till the temperature became 105°C to obtain the unvulcanized rubber composition. Further, the obtained unvalcanized rubber composition was press-vulcanized under a condition at 170°C for 12 minutes to obtain the vulcanized composition.

The cord A shown in Table 1 was covered with the obtained unvulcanized rubber composition to form a jointless band. The jointless band was laminated with other tire members, followed by vulcanization under a condition at 170°C for 12 minutes to obtain a tire for testing (tire size: 225/40R18 92Y XL). The detail of the jointless band in the tire for testing is shown in the following.
Thickness: 1.02 mm
Gauge on the cord: 0.095 mm
Distribution of the cords: 36 ends/25 cm
Method of forming the jointless band: winding the jointless band tape including 10 band cords with a space of 1.0 mm therebetween.
Angle with reference to the circumferential direction of the tire of the band cord: 0 degree
Stretch of the band cord in the breaker edge portion due to vulcanization: 2.0 %

In addition, the detail of the breaker (outer layer and inner layer) in the tire for testing is shown in the following. The outer layer and the inner layer have the same structure except their angle of the breaker cord.
Cord: cord G (steel cord) in Table 1
Thickness: 1.2 mm
Gauge on the cord: 0.255 mm
Distribution of the cords: 40 ends/25 cm
Angle with reference to the circumferential direction of the tire of the breaker cord: 20 degree (inner layer), -20 degree (outer layer)

The following evaluations were carried out using the obtained unvulcanized rubber composition, the vulcanized rubber composition and the tire for testing. The results thereof are shown in Tables 2 to 4.

### <Viscoelasticity Test>

The loss tangent (tanδ) and complex modulus (E*) of each vulcanized rubber composition were measured under a condition at 70°C, an initial strain of 10 %, a dynamic strain of 2 %, and a frequency of 10 Hz using a viscoelastic spectrometer available from Iwamoto Seisakusyo K.K. The smaller tanδ shows the lower rolling resistance and the more excellent fuel efficiency and the larger E* shows the more excellent durability, and the targeted level of performance is at least 450.

### <Tensile Test>

The elongation at break EB (%) was measured by carrying out a tensile test at room temperature using a No.3 dumbbell type test piece comprising the vulcanized rubber composition according to JIS K 6251 "Vulcanized Rubber and Thermoplastic Rubber - Method of Obtaining Tensile Characteristics". The larger EB shows the more excellent elongation at break.

### <Adhesive Property Test>

The rubber sheet including the cord was formed by sandwiching the cord A arranged at even intervals with two unvulcanized sheets with the thickness of 0.7 mm comprised of the unvulcanized rubber composition. The rubber sheet including the cord was press-vulcanized at 160°C for 15 minutes to make a sample for the adhesive property test. Then, the obtained two rubber sheets of the sample for the adhesive property test were slowly peeled with a peeling resistance measuring machine. The condition of the rubber cover on the surface of the cord after peeling was scored out of 5. The higher score shows the more excellent adhesive property between the rubber composition and the cord and the score of not less than 4 is the targeted level of performance.

### <Sheeting Processability Test>

The unvulcanized rubber composition was heated at 90°C for two minutes and the unvulcanized rubber composition after heating was processed by extrusion into a sheet having the thickness of 0.7 mm. The obtained sheet was comprehensively observed with reference to flatness, the presence of scorched crumb, concavity and convexity of the edge and the degree of shrink by visual evaluation. The index of the sheet was evaluated with defining the processability (sheeting processability) of Comparative Example 1 as 100 and the larger index shows the more excellent processability (sheeting processability).

### <Measurement of the Thickness of the Rubber between the Breaker and the Band>

The tire for testing was cut off perpendicularly to the periphery direction of the tire and the thickness of the rubber between the breaker and the band was measured at the section.

### <Long-term Durability Test>

Under the condition of 150 % load of the maximum load of JIS standard (maximum internal pressure condition), the tire for test was subject to a drum running at an air pressure of 240 kPa (corresponding air pressure where the maximum pressure can be applied), a speed of 100 km/h and a test environment of 30°C. The distance of running was measured till a separation of the breaker portion (BEL between the band and the breaker) and the appearance of the tire was deformed (till the tire was damaged). The index thereof was shown with defining the distance of running of Comparative Example 1 as 100. The larger index shows the more excellent long-term durability.

### <High Speed Durability Test>

Under the condition of 150 % load of the maximum load of JIS standard (maximum internal pressure condition), the tire for test was subject to a drum running at an air pressure of 240 kPa (corresponding air pressure where the maximum pressure can be applied) and a test environment of 30°C. The speed was increased by 10 km/h per 20 minutes to measure the running speed where the deformation of the appearance at the tread portion or side wall portion was detected. The index thereof was shown with defining the running speed of Comparative Example 1 as 100. The larger index shows the more excellent high speed durability.

**TABLE 2**

| | EXAMPLE | | | | | | | | |
|---|---|---|---|---|---|---|---|---|---|
| | 1 | 2 | 3 | 4 | 5 | 6 | 7 | 8 | 9 |
| Compounded amount (parts by mass) | | | | | | | | | |
| NB | 80 | 80 | 80 | 80 | 80 | 80 | 80 | 80 | 80 |
| SBR | 20 | 20 | 20 | 20 | 20 | 20 | 20 | 20 | 20 |
| BR | - | - | - | - | - | - | - | - | - |
| Silica (1) | 10 | 10 | 10 | - | - | 5 | 17 | 10 | 10 |
| Silica (2) | - | - | - | - | - | - | - | - | - |
| Carbon black (1) | - | - | - | - | - | - | - | - | 15 |
| Carbon black (2) | - | - | - | 45 | 45 | - | - | - | - |
| Carbon black (3) | 38 | 38 | 38 | - | - | 40 | 35 | - | - |
| Carbon black (4) | - | - | - | - | - | - | - | 34 | - |
| Carbon black (5) | - | - | - | - | - | - | - | - | 23 |
| Oil | 2 | 2 | 2 | 2 | 2 | - | - | 2 | 2 |
| Silane coupling agent | - | - | - | - | - | - | 1.02 | - | - |
| Antioxidant | 1 | 1 | 1 | 1 | 1 | 1 | 1 | 1 | 1 |
| Stearic acid | 3 | 3 | 3 | 3 | 3 | 3 | 3 | 3 | 3 |
| Zinc oxide | 7 | 7 | 7 | 7 | 7 | 7 | 7 | 7 | 7 |
| Sulfur | 3.13 | 2.50 | 3.75 | 3.13 | 3.75 | 3.13 | 3.13 | 3.13 | 3.13 |
| (Pure sulfur portion therein) | (2.50) | (2.00) | (3.00) | (2.50) | (3.00) | (2.50) | (2.50) | (2.50) | (2.50) |
| Vulcanization accelerator | 1.1 | 1.1 | 1.1 | 1.1 | 1.1 | 1.1 | 1.1 | 1.1 | 1.1 |
| SUMIKANOL 620 | 1.5 | 2.0 | 1.0 | 1.5 | 1.5 | 1.5 | 1.5 | 1.5 | 1.5 |
| SUMIKANOL 610 | - | - | - | - | - | - | - | - | - |
| PR12686 | - | - | - | - | - | - | - | - | - |
| PR23194 | - | - | - | - | - | - | - | - | - |
| PR-X11061 | - | - | - | - | - | - | - | - | - |
| HMMM | - | - | - | - | - | - | - | - | - |
| HMMPME | 1.8 | 2.4 | 1.2 | 1.8 | 1.8 | 1.8 | 1.8 | 1.8 | 1.8 |
| HMT | - | - | - | - | - | - | - | - | - |
| Evaluation result | | | | | | | | | |
| E* (70°C) | 6.50 | 6.45 | 6.65 | 6.25 | 6.38 | 6.45 | 6.48 | 6.45 | 6.66 |
| tanδ (70°C) | 0.135 | 0.155 | 0.131 | 0.129 | 0.125 | 0.141 | 0.123 | 0.148 | 0.147 |
| EB(%) | 560 | 585 | 505 | 485 | 450 | 535 | 580 | 555 | 540 |
| Adhesive property | 5 | 4 | 5 | 4 | 5 | 5 | 5 | 5 | 5 |
| Index of processability | 105 | 110 | 105 | 120 | 115 | 110 | 90 | 95 | 90 |
| Thickness of rubber between breaker and band (mm) | 0.51 | 0.5 | 0.52 | 0.49 | 0.5 | 0.51 | 0.6 | 0.49 | 0.48 |
| Long-term durability | 155 | 150 | 130 | 120 | 105 | 135 | 155 | 135 | 125 |
| High speed durability | 125 | 115 | 120 | 110 | 105 | 120 | 120 | 120 | 110 |

**TABLE 3**

| | EXAMPLE | | | | | | | |
|---|---|---|---|---|---|---|---|---|
| | 10 | 11 | 12 | 13 | 14 | 15 | 16 | 17 |
| Compounded amount (parts by mass) | | | | | | | | |
| NB | 80 | 80 | 80 | 80 | 60 | 80 | 80 | 80 |
| SBR | 20 | 20 | 20 | 20 | 25 | 20 | 20 | 20 |
| BR | - | - | - | - | 15 | - | - | - |
| Silica (1) | 10 | 10 | 10 | - | 10 | 10 | 10 | 10 |
| Silica (2) | - | - | - | 10 | - | - | - | - |
| Carbon black (1) | - | - | - | - | - | - | - | - |
| Carbon black (2) | - | - | - | - | - | - | - | - |
| Carbon black (3) | 30 | 46 | 38 | 38 | 38 | 38 | 38 | 38 |
| Carbon black (4) | - | - | - | - | - | - | - | - |
| Carbon black (5) | - | - | - | - | - | - | - | - |
| Oil | 2 | 2 | 2 | 2 | 2 | 2 | 2 | 2 |
| Silane coupling agent | - | - | - | - | - | - | - | - |
| Antioxidant | 1 | 1 | 1 | 1 | 1 | 1 | 1 | 1 |
| Stearic acid | 3 | 3 | 3 | 3 | 3 | 3 | 3 | 3 |
| Zinc oxide | 7 | 7 | 7 | 7 | 7 | 7 | 7 | 7 |
| Sulfur | 3.13 | 3.13 | 3.13 | 3.13 | 3.13 | 3.13 | 3.13 | 3.13 |
| (Pure sulfur portion therein) | (2.50) | (2.50) | (2.50) | (2.50) | (2.50) | (2.50) | (2.50) | (2.50) |
| Vulcanization accelerator | 1.1 | 1.1 | 1.1 | 1.1 | 1.1 | 1.1 | 1.1 | 1.1 |
| SUMIKANOL 620 | 2.0 | 1.5 | - | 1.5 | 1.5 | - | - | - |
| SUMIKANOL 610 | - | - | 1.5 | - | - | - | - | - |
| PR12686 | - | - | - | - | - | 1.5 | - | - |
| PR53194 | - | - | - | - | - | - | 1.5 | - |
| PR-X11061 | - | - | - | - | - | - | - | 1.5 |
| HMMM | - | - | - | - | - | - | - | - |
| HMMPME | 2.4 | 1.8 | 1.8 | 1.8 | 1.8 | 1.8 | 1.8 | 1.8 |
| HMT | - | - | - | - | - | - | - | - |
| Evaluation result | | | | | | | | |
| E* (70°C) | 5.72 | 8.50 | 6.75 | 6.41 | 6.78 | 7.95 | 7.71 | 7.99 |
| tanδ (70°C) | 0.124 | 0.169 | 0.144 | 0.127 | 0.115 | 0.152 | 0.149 | 0.146 |
| EB (%) | 585 | 450 | 580 | 555 | 560 | 610 | 605 | 615 |
| Adhesive property | 5 | 5 | 5 | 5 | 5 | 4 | 4 | 4 |
| Index of processability | 105 | 90 | 105 | 110 | 105 | 110 | 110 | 110 |
| Thickness of rubber between breaker and band (mm) | 0.48 | 0.59 | 0.51 | 0.51 | 0.53 | 0.52 | 0.51 | 0.52 |
| Long-term durability | 105 | 105 | 155 | 155 | 160 | 135 | 130 | 135 |
| High speed durability | 105 | 120 | 125 | 120 | 125 | 125 | 125 | 130 |

**TABLE 4**

| | COMPARATIVE EXAMPLE | | | | | | | | | |
|---|---|---|---|---|---|---|---|---|---|---|
| | 1 | 2 | 3 | 4 | 5 | 6 | 7 | 8 | 9 | 10 |
| Compounded amount (parts by mass) | | | | | | | | | | |
| NB | 80 | 80 | 40 | 40 | 80 | 80 | 80 | 80 | 80 | 80 |
| SBR | 20 | 20 | 60 | - | 20 | 20 | 20 | 20 | 20 | 20 |
| BR | - | - | - | 60 | - | - | - | - | - | - |
| Silica (1) | 10 | 10 | - | - | 40 | 10 | - | 10 | 10 | 10 |
| Silica (2) | - | - | - | - | - | - | - | - | - | - |
| Carbon black (1) | - | - | - | - | - | - | - | - | - | - |
| Carbon black (2) | - | - | 45 | 45 | - | 56 | 45 | - | - | - |
| Carbon black (3) | 38 | 38 | - | - | 8 | - | - | 38 | 38 | 38 |
| Carbon black (4) | - | - | - | - | - | - | - | - | - | - |
| Carbon black (5) | - | - | - | - | - | - | - | - | - | - |
| Oil | 2 | 2 | 2 | 2 | 2 | 2 | 2 | 2 | 2 | 2 |
| Silane coupling agent | - | - | - | - | 2.4 | - | - | - | - | - |
| Antioxidant | 1 | 1 | 1 | 1 | 1 | 1 | 1 | 1 | 1 | 1 |
| Stearic acid | 3 | 3 | 3 | 3 | 3 | 3 | 3 | 3 | 3 | 3 |
| Zinc oxide | 7 | 7 | 7 | 7 | 7 | 7 | 7 | 7 | 7 | 7 |
| Sulfur | 4.00 | 1.80 | 3.75 | 3.75 | 3.13 | 3.13 | 3.75 | 3.13 | 3.13 | 3.13 |
| (Pure sulfur portion therein) | (3.20) | (1.44) | (3.00) | (3.00) | (2.50) | (2.50) | (3.00) | (2.50) | (2.50) | (2.50) |
| Vulcanization accelerator | 1.1 | 2.0 | 1.1 | 1.1 | 1.1 | 1.1 | 1.1 | 1.1 | 1.1 | 1.1 |
| SUMIKANOL 620 | 0.5 | 2.0 | 1.5 | 1.5 | 1.5 | 1.5 | 1.5 | 4.0 | - | 4.0 |
| SUMIKANOL 610 | - | - | - | - | - | - | - | - | - | - |
| PR12686 | - | - | - | - | - | - | - | - | 4.0 | - |
| PR53194 | - | - | - | - | - | - | - | - | - | - |
| PR-X11061 | - | - | - | - | - | - | - | - | - | - |
| HMMM | - | - | - | - | - | - | - | - | - | - |
| HMMPME | 1.8 | 1.8 | 1.8 | 1.8 | 1.8 | 1.8 | - | 1.8 | 1.8 | 4.0 |
| HMT | - | - | - | - | - | - | 0.3 | - | - | - |
| Evaluation result | | | | | | | | | | |
| E* (70°C) | 6.55 | 6.21 | 7.25 | 6.15 | 4.12 | 8.89 | 6.32 | 8.95 | 10.56 | 10.15 |
| tanδ (70°C) | 0.119 | 0.168 | 0.155 | 0.132 | 0.098 | 0.195 | 0.129 | 0.158 | 0.191 | 0.169 |
| EB (%) | 380 | 560 | 385 | 355 | 695 | 370 | 455 | 420 | 355 | 325 |
| Adhesive property | 5 | 2 | 3 | 3 | 1 | 5 | 1 | 5 | 3 | 5 |
| Index of processability | 100 | 105 | 115 | 60 | 40 | 60 | 115 | 80 | 100 | 60 |
| Thickness of rubber between breaker and band (mm) | 0.51 | 0.50 | 0.47 | 0.48 | 0.41 | 0.65 | 0.51 | 0.59 | 0.52 | 0.59 |
| Long-term durability | 100 | 95 | 80 | 50 | 40 | 90 | 65 | 85 | 60 | 60 |
| High speed durability | 100 | 90 | 85 | 70 | 80 | 105 | 110 | 110 | 95 | 100 |

### EXAMPLES 18 and 19 and COMPARATIVE EXAMPLES 11 to 20

The jointless band was formed by combining the rubber composition for band cord topping shown in Table 5 which was the same as those of Examples or Comparative Examples and the cord (shown as A to F of Table 1) shown in Table 5. The jointless band was laminated with other tire members and vulcanized under the condition at 170°C for 12 minutes to obtain the tire for test (tire size: 225/40R18 92Y XL). The detail of the formed jointless band is shown in Table 5. Additionally, the method of forming, the stretch due to vulcanization, the angle with reference to the periphery direction of the tire and the structure of the breaker (outer layer and inner layer) were similar to those of Examples 1 to 17.

The measurement of the thickness of the rubber between the breaker and the band, long-term durability test and high speed durability test were carried out using the obtained tire for test. The results thereof are shown in Table 5 with the results of Example 1 and Comparative Example 1.

**TABLE 5**

| | EXAMPLE | | | COMPARATIVE EXAMPLE | | | | | | | | | | |
|---|---|---|---|---|---|---|---|---|---|---|---|---|---|---|
| | 1 | 18 | 19 | 1 | 11 | 12 | 13 | 14 | 15 | 16 | 17 | 18 | 19 | 20 |
| Jointless band | | | | | | | | | | | | | | |
| Rubber composition for topping | EX. 1 | EX. 1 | EX. 1 | COM. EX. 1 | EX. 1 | EX. 1 | EX. 1 | EX. 1 | COM. EX. 1 | COM. EX. 1 | COM. EX. 1 | COM. EX. 1 | COM. EX. 1 | COM. EX. 1 |
| Cord | A | A | C | A | B | D | E | F | A | B | C | D | E | F |
| Thickness (mm) | 1.02 | 1.02 | 0.91 | 1.02 | 0.76 | 0.74 | 0.87 | 0.87 | 1.02 | 0.76 | 0.91 | 0.74 | 0.87 | 0.87 |
| Gauge on cord (mm) | 0.095 | 0.095 | 0.095 | 0.095 | 0.095 | 0.095 | 0.095 | 0.095 | 0.095 | 0.095 | 0.095 | 0.095 | 0.095 | 0.095 |
| Distribution of cords (ends/25 cm) | 36 | 50 | 49 | 36 | 49 | 49 | 50 | 50 | 50 | 49 | 49 | 49 | 50 | 50 |
| Evaluation result | | | | | | | | | | | | | | |
| Rubber thickness between breaker and band (mm) | 0.51 | 0.55 | 0.61 | 0.51 | 0.69 | 0.64 | 0.92 | 0.84 | 0.55 | 0.69 | 0.61 | 0.62 | 0.92 | 0.84 |
| Long-term durability | 155 | 150 | 160 | 100 | 165 | 170 | 180 | 175 | 95 | 115 | 110 | 120 | 130 | 120 |
| High speed durability | 125 | 150 | 110 | 100 | 95 | 85 | 70 | 60 | 125 | 80 | 90 | 70 | 50 | 50 |

From the results of Tables 2 to 5, it can be recognized that the pneumatic tire which is excellent in long-term durability and high speed durability even though the thickness of the rubber between the breaker and the band is small can be obtained by making the pneumatic tire having a jointless band obtained by covering a predetermined cord with a predetermined rubber composition for band cord topping.

### [Explanation of Symbols]

- 10: Jointless band
- 11: Band cord
- 20: Breaker
- 21: Outer layer
- 22: Inner layer
- 221: Breaker cord
- 30: Tie gum
- 40: Carcass
- 50: Inner liner
- Tr: Tread portion

## Claims

1. A pneumatic tire comprising a jointless band obtained by covering a cord having a cord breaking strength of 200 to 600 N and a degree of elongation at a tension of 66 N of 1.0 to 3.5 % with a rubber composition for band cord topping comprising 1.5 to 3.1 parts by mass of sulfur,
10 to 55 parts by mass of carbon black having a nitrogen adsorption specific surface area of 38 to 125 m²/g,
1 to 3 parts by mass of at least one compound selected from the group consisting of a resorcinol resin, a modified resorcinol resin, a cresol resin, a modified cresol resin, a phenol resin and a modified phenol resin, and
0.7 to 3 parts by mass of at least one compound selected from the group consisting of a partial condensate of hexamethoxymethylolmelamine and a partial condensate of hexamethylolmelaminepentamethylether
based on 100 parts by mass of a rubber component comprising at least 50 % by mass of isoprene type rubber,
wherein an absolute value of a cord angle with reference to the circumferential direction of the tire is 0 to 40 degree.

2. The pneumatic tire according to claim 1,
wherein the cord is a composite cord obtained by twisting an aramid fiber and a nylon fiber together, or a single twisted cord of a polyethylene naphthalate fiber and
the rubber composition for band cord topping further comprises 5 to 17 parts by mass of wet silica having a nitrogen adsorption specific surface area of 80 to 250 m²/g
based on 100 parts by mass of the rubber component, and
has an elongation at break EB of at least 450 % and a complex modulus E* (70°C) of 5.0 to 9.0 MPa after vulcanization at 170°C for 12 minutes.

3. The pneumatic tire according to claim 2,
wherein the stretch of the band cord at the breaker edge portion due to vulcanization is 0 to 2.5 %.

## Patentansprüche

1. Luftreifen, der ein nahtloses Band umfasst, das erhalten ist durch Bedecken eines Cords mit einer Cordbruchfestigkeit von 200 bis 600 N und einem Dehnungsgrad bei einer Spannung von 66 N von 1,0 bis 3,5 % mit einer Kautschukzusammensetzung für eine Bandcorddeckschicht, umfassend 1,5 bis 3,1 Massenteile Schwefel,
10 bis 55 Massenteile Ruß mit einer durch Stickstoffadsorption gemessenen spezifischen Oberfläche von 38 bis 125 m²/g,
1 bis 3 Massenteile von zumindest einer Verbindung, die aus der Gruppe bestehend aus einem Resorcinolharz, einem modifizierten Resorcinolharz, einem Cresolharz, einem modifizierten Cresolharz, einem Phenolharz und einem modifizierten Phenolharz ausgewählt ist und
0,7 bis 3 Massenteile von zumindest einer Verbindung, die aus der Gruppe bestehend aus einem Teilkondensat von Hexamethoxymethylolmelamin und einem Teilkondensat von Hexamethylolmelaminpentamethylether ausgewählt ist,
basierend auf 100 Massenteilen einer Kautschukkomponente, die zumindest 50 Massen-% Kautschuk vom Isoprentyp enthält,
wobei ein absoluter Wert eines Cordwinkels in Bezug auf die Umfangsrichtung des Reifens 0 bis 40 Grad beträgt.

2. Luftreifen nach Anspruch 1,
wobei der Cord ein Verbundcord, der durch Zusammendrehen einer Aramidfaser und einer Nylonfaser erhalten ist, oder ein einzeln gedrehter Cord einer Polyethylennaphthalatfaser ist und
die Kautschukzusammensetzung für eine Bandcorddeckschicht des Weiteren 5 bis 17 Massenteile nasses Silica mit einer durch Stickstoffadsorption gemessenen spezifischen Oberfläche von 80 bis 250 m²/g basierend auf 100 Massenteilen der Kautschukkomponente enthält und eine Bruchdehnung EB von zumindest 450 % und einen komplexen Modul E* (70°C) von 5,0 bis 9,0 MPa nach Vulkanisation bei 170°C für 12 Minuten aufweist.

3. Luftreifen nach Anspruch 2,
wobei die Streckung des Bandcords an dem Randabschnitt des Zwischenbaus wegen der Vulkanisation 0 bis 2,5 % beträgt.

## Revendications

1. Pneumatique comprenant une bande sans joint obtenue par .recouvrement d'un câble ayant une résistance à la rupture de câble de 200 à 600 N et un degré d'allongement à une tension de 66 N de 1,0 à 3,5 % avec une composition de caoutchouc pour revêtement de câble de bande comprenant
1,5 à 3,1 parties en masse de soufre,
10 à 55 parties en masse de noir de carbone ayant une surface spécifique d'adsorption d'azote de 38 à 125 m²/g,
1 à 3 parties en masse d'au moins un composé choisi dans le groupe consistant en une résine de résorcinol, une résine de résorcinol modifiée, une résine de crésol, une résine de crésol modifiée, une résine phénolique et une résine phénolique modifiée, et
0,7 à 3 parties en masse d'au moins un composé choisi dans le groupe consistant en un condensat partiel d'hexaméthoxyméthylolmélamine et un condensat partiel d'hexaméthylolmélaminepentaméthyléther
sur la base de 100 parties en masse d'un composant caoutchouc comprenant au moins 50 % en masse de caoutchouc de type isoprène,
où une valeur absolue d'un angle de câble par rapport à la direction circonférentielle du pneumatique est 0 à 40 degrés.

2. Pneumatique selon la revendication 1,
où le câble est un câble composite obtenu par tordage d'une fibre d'aramide et d'une fibre de nylon ensemble, ou un câble tordu unique d'une fibre de polyéthylène naphtalate et
la composition de caoutchouc pour revêtement de câble de bande comprend en outre 5 à 17 parties en masse de silice humide ayant une surface spécifique d'adsorption d'azote de 80 à 250 m²/g
sur la base de 100 parties en masse du composant caoutchouc, et
a une déformation à la rupture DR d'au moins 450 % et un module complexe E* (70°C) de 5,0 à 9,0 MPa après vulcanisation à 170°C pendant 12 minutes.

3. Pneumatique selon la revendication 2,
où l'extension du câble de bande au niveau de la partie de bord de nappe de sommet due à la vulcanisation est 0 à 2,5 %.
